# EUROPÄISCHE PATENTSCHRIFT

(11) **EP 2 969 344 B1**
(45) Veröffentlichungstag und Bekanntmachung des Hinweises auf die Patenterteilung: **12.10.2016**
(21) Anmeldenummer: 14706475.2
(22) Anmeldetag: 07.02.2014
(51) Int. Cl.: B23D 77/14, B23D 75/00, B23D 77/00

(54) **BOHRWERKZEUG, INSBESONDERE REIBAHLE**
DRILLING TOOL, IN PARTICULAR REAMER
OUTIL DE FORAGE, EN PARTICULIER ALÉSOIR

(30) Priorität: 11.03.2013 DE 102013004105
(43) Veröffentlichungstag der Anmeldung: 20.01.2016
(73) Patentinhaber: Audi AG, 85045 Ingolstadt (DE)
(72) Erfinder: KOPTON, Peter, 85092 Kösching (DE)
(74) Vertreter: Neuhausen, Marc-Alexander
(86) Internationale Anmeldenummer: PCT/EP2014/000347
(87) Internationale Veröffentlichungsnummer: WO 2014/139620

(56) Entgegenhaltungen:
- EP-A1- 2 522 451
- DE-A1- 3 805 729
- DE-A1-102011 001 772
- US-A1- 2002 102 141

## Beschreibung

Die Erfindung betrifft ein Bohrwerkzeug, insbesondere eine Reibahle, nach dem Oberbegriff des Patentanspruches 1 und ein Verfahren zur Oberflächenbearbeitung einer Innenwandung einer vorgebohrten Werkstück-Kernbohrung.

Ein solches Bohrwerkzeug wird im Fahrzeugbau zum Beispiel bei der Herstellung einer Zylinderkopf-Bohrung verwendet, und zwar zur Feinbearbeitung der Innenwandung der Zylinderkopf-Bohrung, wodurch deren Oberflächengüte sowie die Form- und Maßgenauigkeit der Bohrung verbessert wird.

Aus der DE 38 05 729 A1 ist ein gattungsgemäßes Bohr- oder Reibwerkzeug bekannt, das einen Spannschaft und einen Bohrkörper aufweist. Zwischen dessen Stirnseite und dem Spannschaft erstrecken sich drei Haupt-Schneiden spiralförmig entlang einer Bohrkörper-Längsachse. Jede dieser Haupt-Schneiden weist einen Schneidensteg auf, der eine, einen nutenförmigen Spanraum zugewandte Spanfläche und eine außenumfangsseitige Freifläche aufweist. Die Spanfläche und die Freifläche laufen an einer sich längs der Bohrkörper-Längsachse erstreckenden Schneidkante zusammen, mit der bei Bohrwerkzeug-Rotation ein Materialabtrag an der Innenwandung einer vorgebohrten Werkstück-Kernbohrung erfolgt.

Mit Hilfe des aus der DE 38 05 729 A1 bekannten Reibwerkzeuges wird die Oberflächenbearbeitung einer bereits vorgebohrten Zylinderkopf-Kernbohrung wie folgt durchgeführt: Zunächst wird das Reibwerkzeug mit hohem Energieaufwand auf eine sehr hohe Drehzahl (zum Beispiel im Bereich von 10.000 bis 15.000 U/min) gebracht. Anschließend wird das rotierende Reibwerkzeug bei dieser hohen Drehzahl mit einer Axialbewegung in die Zylinderkopf-Kernbohrung eingefahren und wieder daraus entfernt. Je nach Dimensionierung der zu bearbeitenden Zylinderkopf-Kernbohrung liegt die für die Oberflächenbearbeitung erforderliche Zeitdauer in einem Bereich von zum Beispiel einer Sekunde, was speziell bei einer Großserienproduktion ein vergleichsweise großer Zeitaufwand ist.

Die Aufgabe der Erfindung besteht darin, ein Verfahren zur Oberflächenbearbeitung einer Innenwandung einer vorgebohrten Werkstück-Kernbohrung sowie ein Bohrwerkzeug für eine solche Oberflächenbearbeitung bereitzustellen, die bei gleicher Oberflächengüte mit reduziertem Energieaufwand und/oder reduziertem Zeitaufwand erfolgt.

Die Aufgabe ist durch die Merkmale des Patentanspruches 1 oder des Patentanspruches 13 gelöst. Bevorzugte Weiterbildungen der Erfindung sind in den Unteransprüchen offenbart.

Die Erfindung beruht auf dem Sachverhalt, dass mit dem aus dem Stand der Technik bekannten Bohrwerkzeug der umfangsseitige Materialabtrag an der Kernbohrungs-Innenwandung bei sehr hoher Rotationsgeschwindigkeit sowie einer, der Rotationsgeschwindigkeit überlagerten Axialbewegung in die Kernbohrung hinein erfolgt, was zeit- und energieaufwendig ist. Vor diesem Hintergrund ist gemäß dem kennzeichnenden Teil des Patentanspruches 1 ein Bohrwerkzeug bereitgestellt, die zusätzlich zur längs der Bohrkörper-Längsachse verlaufenden Haupt-Schneide (die bei Bohrwerkzeug-Rotation für den Materialabtrag an der Kernbohrungs-Innenwandung zuständig ist) eine Nut-Schneide aufweist. Die Nut-Schneide ist quer zur Bohrkörper-Längsachse ausgerichtet und an der Bohrkörper-Stirnseite angeordnet.

Mit einem solchen Bohrwerkzeug kann die Oberflächenbearbeitung in zwei Bearbeitungsschritten erfolgen: In einem ersten Vorbearbeitungsschritt wird zunächst eine längs der Kernbohrungsachse verlaufende Nut in die Kernbohrungs-Innenwandung ausgebildet. Die Ausbildung der Nut in der Kernbohrungs-Innenwandung erfolgt durch eine geradlinige Axialbewegung des Bohrwerkzeuges in die Kernbohrung hinein. Alternativ dazu kann die Nut auch spiralförmig ausgebildet sein. In diesem Fall wird das Bohrwerkzeug in einem "Gewindebohrmodus" mit geringer Drehzahl in die Kernbohrung eingefahren. In diesem, in die Kernbohrung eingefahrenen Zustand kann bevorzugt die für den umfangsseitigen Materialabtrag zuständige Haupt-Schneide des Bohrwerkzeuges bereits vollständig in Eingriff mit der Nut sein, das heißt über die gesamte Bearbeitungslänge in der Nut angeordnet sein.

In einem anschließenden, zweiten Endbearbeitungsschritt kann dann die Haupt-Schneide des Bohrwerkzeuges unter Bohrwerkzeug-Rotation, jedoch ohne Axial-Vorschub, den umfangsseitigen Materialabtrag vornehmen. Für den obigen Endbearbeitungsschritt ist - im Gegensatz zum Stand der Technik - keine hohe Drehzahl erforderlich, sondern (aufgrund des fehlenden Axialvorschubs) lediglich eine geringe Drehzahl. Bei zum Beispiel zwei mit Bezug auf die Bohrkörper-Längsachse diametral gegenüberliegenden, spiegelbildlich ausgeführten Haupt-Schneiden ist lediglich zumindest eine halbe Umdrehung des Bohrwerkzeuges erforderlich. Anschließend kann das Bohrwerkzeug aus der oberflächenbearbeiteten Kernbohrung herausgeführt werden. Auf diese Weise erfolgt die Oberflächenbearbeitung wesentlich energieeffizienter sowie mit stark reduziertem Zeitaufwand.

Es wird darauf hingewiesen, dass sowohl der Vorbearbeitungsschritt als auch der Endbearbeitungsschritt ohne Werkzeugwechsel, das heißt durch ein gemeinsames Bohrwerkzeug erfolgen kann. Alternativ kann jedoch der Vorbearbeitungsschritt und der Endbearbeitungsschritt mit Werkzeugwechsel, das heißt durch unterschiedliche Bohrwerkzeuge erfolgen.

Wie erwähnt, wird im Vorbearbeitungsschritt die zumindest eine Spiralnut in der Kernbohrungs-Innenwandung in einem Gewindebohrmodus erzeugt. Das heißt dass bei Erzeugen der Spiralnut das Bohrwerkzeug sowohl mit axialer Vorschubgeschwindigkeit als auch unter Rotation um seine Bohrkörper-Längsachse (abhängig von der Spiralnut-Steigung) in die zylindrische Kernbohrung bewegt wird, und zwar so, dass sich ein durchgehender Spiralnut-Gang ergibt und die Haupt-Schneide in Eingriff mit der Spiralnut ist.

Die beim Vorbearbeitungsschritt in die Kernbohrungs-Innenwandung eingebrachte Nut weist eine Nuttiefe auf, die der im anschließenden Endbearbeitungsschritt abzutragenden Materialstärke entspricht. Hervorzuheben ist, dass bevorzugt sowohl der Vorbearbeitungsschritt als auch der Endbearbeitungsschritt gemeinsam durch das erfindungsgemäße Bohrwerkzeug vorgenommen werden können. Alternativ kann die Nuttiefe auch größer sein als die abzutragende Materialstärke. In diesem Fall bleibt die Nut auch im Fertigzustand an der Kernbohrungs-Innenwandung. Eine solche Nut kann, je nach Verwendungszweck des Werkstückes, zum Beispiel als ein Luftführungskanal wirken.

Nachfolgend wird die spezielle Schneidengeometrie des erfindungsgemäßen Bohrwerkzeuges beschrieben: So kann die Nut-Schneide eine Nutgrund-Schneidekante aufweisen, die an einer ersten Schneidenecke mit der Haupt-Schneidkante zusammenläuft. Zudem kann die außenumfangsseitige Freifläche des Schneidenstegs und eine Nut-Spanfläche an der Nutgrund-Schneidkante zusammenlaufen. Die Nut-Spanfläche drückt den während des Vorbearbeitungsschrittes entstehenden Nutspan in den, längs der Bohrkörper-Längsachse verlaufenden nutenförmigen Spanraum und wird von dort weiter in Richtung aus der Kernbohrung geführt.

Die Nut-Spanfläche ist sowohl durch die erwähnte Nut-Schneidkante als auch durch erste und zweite Nutflanken-Schneidkanten begrenzt. Diese gehen jeweils an der ersten Schneidenecke und an einer zweiten Schneidenecke in die Nutgrund-Schneidkante über. An der ersten Schneidenecke laufen somit insgesamt die Haupt-Schneidkante, die erste Nutflanken-Schneidkante sowie die Nutgrund-Schneidkante zusammen.

Im Hinblick auf reduzierte mechanische Belastungen der, das Bohrwerkzeug antreibenden Bohrvorrichtung ist es bevorzugt, wenn die Nut im -Vorbearbeitungsschritt nicht geradlinig, sondern spiralförmig in die Kernbohrungs-Innenwandung eingebracht wird. Entsprechend verläuft auch die Haupt-Schneide mit einem Drallwinkel spiralförmig um die Bohrkörper-Längsachse. In diesem Fall wird die Nut sowohl mit der translatorischen Hubbewegung als auch mit einer, dem Drallwinkel angepassten Rotationsbewegung des Bohrwerkzeuges spiralförmig in die Innenwandung der Kernbohrung (das heißt im Gewindebohrmodus) eingeschnitten.

Für ein einwandfreies Abtragen des Nutspans ist es bevorzugt, wenn die Nut-Schneidkante mit Bezug auf eine zur Bohrkörper-Längsachse rechtwinklige Ebene mit einem vorgegebenen Anstellwinkel schräggestellt ist. Der Anstellwinkel ist bevorzugt so bemessen, dass, in der Rotationsrichtung betrachtet, die vorauseilende erste Schneidecke um einen Längsversatz von der Bohrkörper-Stirnseite beabstandet ist, der größer als der Längsversatz der zweiten Schneidecke ist. Gegebenenfalls kann die zweite Schneidecke flächenbündig an der, bevorzugt flachen Bohrkörper-Stirnseite abschließen.

Im Hinblick auf eine einwandfreie Oberflächenbearbeitung ist es von Relevanz, dass der während des Vorbearbeitungsschrittes anfallende Nutspan zuverlässig aus der Kernbohrung abgeführt wird. Für eine solche zuverlässige Nutspan-Abführung kann die Nut-Spanfläche der Nut-Schneide radial nach innen mit einer Spanleitfläche verlängert sein. Über die Spanleitfläche kann der beim Nut-Schneiden entstehende Nutspan leichtgängig in den Längs der Bohrkörper-Längsachse verlaufenden Spanraum gedrückt werden. Die Spanleitfläche ist bevorzugt ebenfalls in einer Schrägstellung, insbesondere mit dem bereits oben genannten Anstellwinkel zwischen der Bohrkörper-Stirnseite und dem Spanraum angeordnet.

In einer konstruktiven Ausführung kann die, die Nut-Spanfläche radial nach innen verlängernde Spanleitfläche durch eine Eckausnehmung am Übergang zwischen der Bohrkörper-Stirnseite und dem Spanraum gebildet sein.

Für eine weitere Unterstützung der Nutspan-Abfuhr kann an der Bohrkörper-Stirnseite ein radial nach außen abragender Randsteg gebildet sein. Der Randsteg kann den entlang der Bohrkörper-Längsachse verlaufenden, nutenförmigen Spanraum schließen. Auf diese Weise ist zuverlässig verhindert, dass ein Nutspan unmittelbar zwischen der Bohrkörper-Stirnseite und der Kernbohrung verlagert wird.

Die Haupt-Schneide kann den radial abragenden, stirnseitigen Randsteg um einen vorgegebenen Radialversatz überragen. Zudem kann der an sich umlaufende Randsteg von der oben erwähnten Eckausnehmung unterbrochen sein, um einen störungsfreien Abstransport des Nutspans in den Spanraum zu gewährleisten.

Der Span-Abtransport, die Schmierung und/oder die Kühlung kann durch den Einsatz von Kühlmittel, Luft, Öl, einer Minimalmengenschmierung oder von anderen Medien unterstützt werden, die mit hohem Druck zum Beispiel im Bereich der Stirnseite des Bohrwerkzeuges aus einem Kühlmittelaustritt in den Spanraum geführt werden und die Späne aus der Bohrung herausspülen. Zur Versorgung des Bohrwerkzeuges mit solchen Medien kann das Bohrwerkzeug zumindest eine zentrale Mediumleitung aufweisen, von der eine Reihe von Mediumkanälen abzweigen. Die Mediumkanäle können beispielhaft in den längsverlaufenden Spanraum münden.

Wie bereits oben erwähnt, können eine oder mehrere Haupt-Schneiden am Bohrkörper ausgebildet sein. Beispielhaft können umfangsverteilt zumindest eine erste Haupt-Schneide und eine zweite Haupt-Schneide am Bohrkörper ausgebildet sein. Die erste Haupt-Schneide und die zweite Haupt-Schneide können nach dem Vorbearbeitungsschritt jeweils in Eingriff mit der jeweiligen Innenwandungs-Nut der Kernbohrung sein. Die beiden Haupt-Schneiden können sich dabei über die gesamte Nutlänge erstrecken.

Alternativ dazu können sich die beiden Haupt-Schneiden nicht über die gesamte Nutlänge erstrecken, sondern - bevorzugt mit geringer Überlappung - sich jeweils nur über eine erste Nutteillänge und eine zweite Nutteillänge erstrecken. Dadurch kann die auf die Haupt-Schneiden wirkende Drehmomentbelastung reduziert werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer perspektivischen Darstellung das Bohrwerkzeug gemäß einem ersten Ausführungsbeispiel;
- Fig. 2: in einer vergrößerten perspektivischen Darstellung die Stirnseite des Bohrwerkzeuges;
- Fig. 3 und 4: jeweils unterschiedliche Ausführungsbeispiele des Bohrwerkzeuges in Seitenansichten;
- Fig. 5 und 6: jeweils Ansichten eines Bohrwerkzeuges gemäß einem weiteren Ausführungsbeispiel;
- Fig. 7 und 8: jeweils Ansichten, die einen Vorbearbeitungsschritt und einen Endbearbeitungsschritt bei der Oberflächenbehandlung der Innenwandung einer vorgebohrten Werkstück-Kernbohrung veranschaulichen;
- Fig. 9: eine Abwicklung der Kernbohrungs-Innenwandung mit darin eingearbeiteten Nuten, mit denen gestrichelt angedeutete Haupt-Schneiden des Bohrwerkzeugs in Eingriff sind; und
- Fig. 10: in einer Seitenschnittdarstellung ein Bohrwerkzeug gemäß einem weiteren Ausführungsbeispiel.

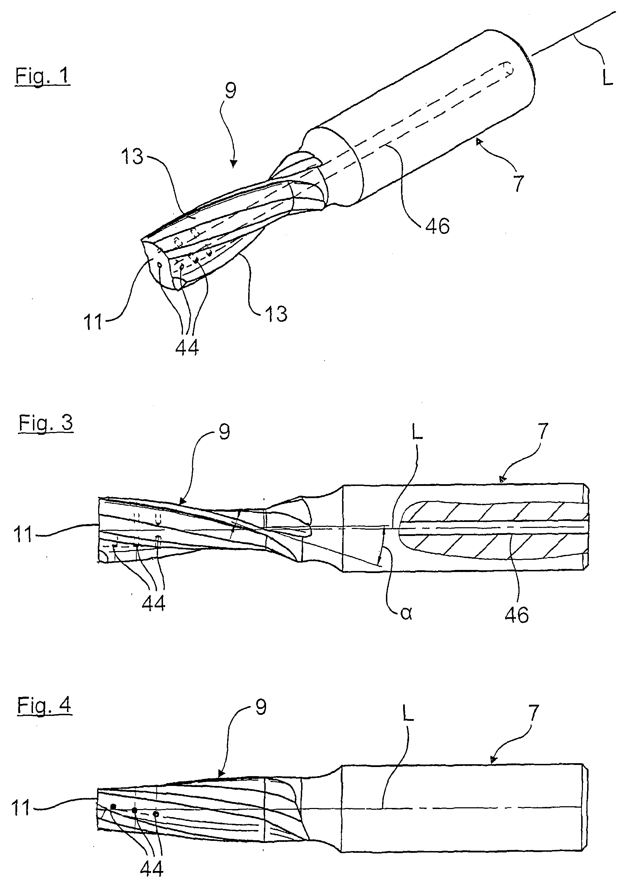

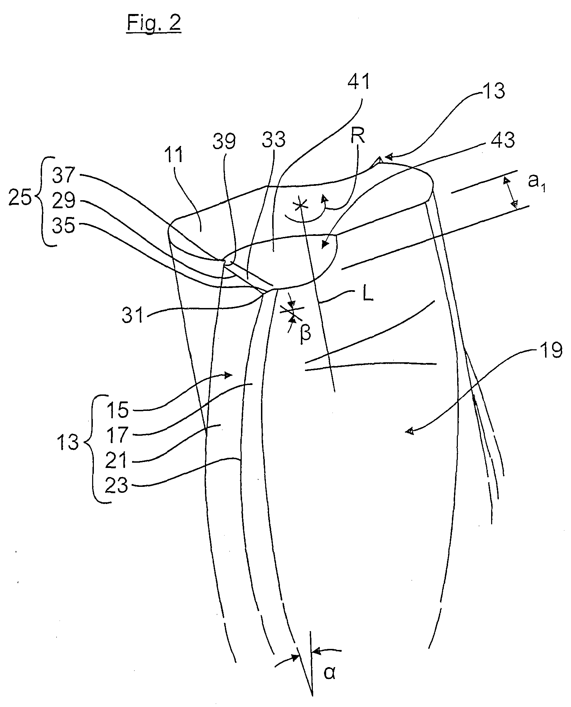

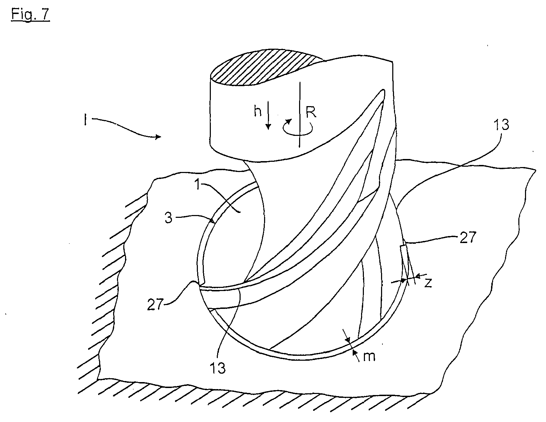

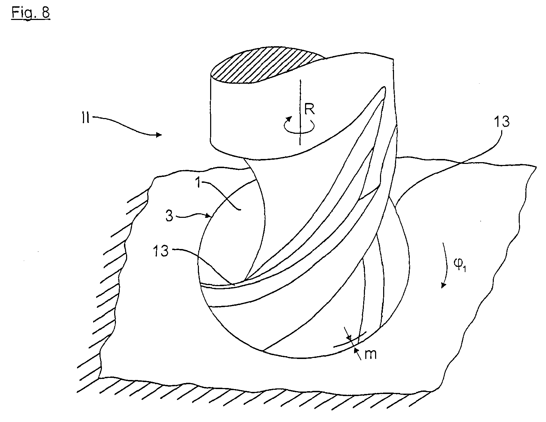

In der Fig. 1 ist ein Bohrwerkzeug zur Oberflächenbehandlung einer später in den Fig. 7 und 8 gezeigten Innenwandung 1 einer Kernbohrung 3 eines Werkstückes 5 gezeigt. Das Bohrwerkzeug weist einen Spannschaft 7 zum Einspannen in ein nicht gezeigtes Bohrfutter einer Bohrvorrichtung sowie einen daran anschließenden Bohrkörper 9 auf. Zwischen der abgeflachten Bohrkörper-Stirnseite 11 und dem Spannschaft 7 erstrecken sich zwei, mit Bezug auf eine Bohrkörper-Längsachse L diametral gegenüberliegende Haupt-Schneiden 13, die zueinander spiegelbildlich ausgeführt sind. Die beiden Haupt-Schneiden 13 verlaufen mit einem Drallwinkel α (Fig. 2) spiralförmig um die Bohrkörper-Längsachse L. Zudem weist jede der Haupt-Schneiden 13 eine radial nach außen abragenden Schneidensteg 15 (Fig. 2) auf. Dieser weist eine Spanfläche 17, die einen jeweils nutenförmigen Spanraum 19 zugewandt ist, um eine außenumfangsseitige Freifläche 21 auf. Die Spanfläche 17 und die außenumfangsseitige Freifläche 21 des Schneidenstegs 15 laufen an einer längs der Bohrkörper-Längsachse L sich erstreckenden Schneidkante 23 zusammen. Mit Hilfe dieser Schneidkante 23 erfolgt bei Bohrwerkzeug-Rotation ein später in den Fig. 7 und 8 beschriebener umfangsseitiger Materialabtrag über eine Materialstärke m (Fig. 7) an der Innenwandung 1 der vorgebohrten Werkstück-Kernbohrung 3.

Zudem geht jede der entlang der Bohrkörper-Längsachse L verlaufenden Haupt-Schneiden 13 an der Bohrkörper-Stirnseite 11 in eine Nut-Schneide 25 über, die quer zur Bohrkörper-Längsachse L ausgerichtet ist. Mit Hilfe der Nut-Schneide 25 kann in einem später beschriebenen Vorbearbeitungsschritt I das Bohrwerkzeug in einem Gewindebohrmodul, das heißt mit einer translatorischen Hubbewegung h (Fig. 7) und einer angepassten, sehr geringen Drehzahl n (Fig. 7) in die Kernbohrung 3 eingefahren werden. Dadurch ergeben sich die in der Fig. 7 gezeigten, diametral gegenüberliegenden Spiralnuten 27, die sich spiralförmig entlang der Kernbohrungs-Längsachse L erstrecken.

Wie aus der Fig. 2 weiter hervorgeht, weist die Nut-Schneide 25 eine Nutgrund-Schneidkante 29 auf. Die Nutgrund-Schneidkante 29 läuft an einer ersten Schneidenecke 31 mit der Haupt-Schneidkante 23 zusammen. Zudem laufen auch die außenumfangsseitige Freifläche 21 des Schneidenstegs 15 und eine stirnseitige Nut-Spanfläche 33 an der Nutgrund-Schneidkante 29 zusammen. Die Nut-Spanfläche 33 ist gemäß der Fig. 2 begrenzt durch die Nutgrund-Schneidkante 29 sowie durch eine erste Nutflanken-Schneidkante 35 und eine zweite Nutflanken-Schneidkante 37. Die erste Nutflanken-Schneidkante 35 geht an der bereits erwähnten Schneidenecke 31 in die Nutgrund-Schneidkante 29 über, während die zweite Nutflanken-Schneidkante 37 an einer zweiten Schneidenecke 39 (Fig. 2) in die Nutgrund-Schneidkante 29 übergeht.

Wie aus den Figuren weiter hervorgeht, ist die Nutgrund-Schneidkante 29 mit Bezug auf eine zur Bohrkörper-Längsachse L rechtwinklige Ebene mit einem Anstellwinkel β schräggestellt. Der Anstellwinkel β liegt bei zirka 45° und ist so gewählt, dass in der Rotationsrichtung R betrachtet die vorauseilende erste Schneidecke 31 um einen Längsversatz a₁ von der Bohrkörper-Stirnseite 11 beabstandet ist. Die zweite, nacheilende Schneidecke 39 ist in der Fig. 1 oder 2 flächenbündig (das heißt ohne Längenversatz) mit der flachen Bohrkörper-Stirnseite 11 ausgerichtet oder kann gegebenenfalls um einen weiteren nicht gezeigten Längsversatz a₂ davon beabstandet sein, der jedoch kleiner als der Längsversatz a₁ der ersten Schneidecke 31 ist.

Die oben erwähnte Nut-Spanfläche 33 der Nut-Schneide 25 ist radial nach innen mit einer Spanleitfläche 41 verlängert. Mittels der Spanleitfläche 41 wird der beim Nut-Schneiden entstehend Nutspan in den längs der Bohrkörperlängsachse L verlaufenden Spanraum 19 gedrückt. Die Spanleitfläche 41 ist ebenfalls mit dem Anstellwinkel β in Schrägstellung zwischen der Bohrkörper-Stirnseite 11 und dem Spanraum 19 angeordnet.

Wie aus den Figuren hervorgeht, ist die Spanleitfläche 41 durch eine Eckausnehmung 43 am Übergang zwischen der Bohrkörper-Stirnseite 11 und dem Spanraum 19 gebildet.

Die Spanabfuhr, die Schmierung und/oder die Kühlung wird durch den Einsatz zum Beispiel eines Kühlmittels oder eines anderen Mediums unterstützt, das mit hohem Druck aus Kühlmittelauslässen 44 (Fig. 1) in der Bohrkörper-Stirnseite 11 sowie im Bereich des Spanraum 19 geführt ist, um die Späne aus der Kernbohrung 3 heraus zu fördern. Zur Versorgung des Bohrwerkzeuges mit Kühlmittel weist das Bohrwerkzeug beispielhaft eine zentrale Kühlmittelleitung 46 auf, von der die Kühlmittelauslässe 44 abzweigen.

Aus den Fig. 3 und 4 sind weitere Ausführungsformen des Bohrwerkzeuges bekannt. Im Unterschied zu den Fig. 1 und 2 ist in der Fig. 3 eine gedachte Hüllkurve der Haupt-Schneiden 13 nicht mehr zylindrisch, sondern vielmehr in Richtung auf die Bohrkörper-Stirnseite 11 konusförmig ausgeweitet. Im Unterschied dazu ist in der Fig. 4 die Hüllkurve der Haupt-Schneiden 13 in Richtung auf den Spannschaft 7 konusartig ausgeweitet.

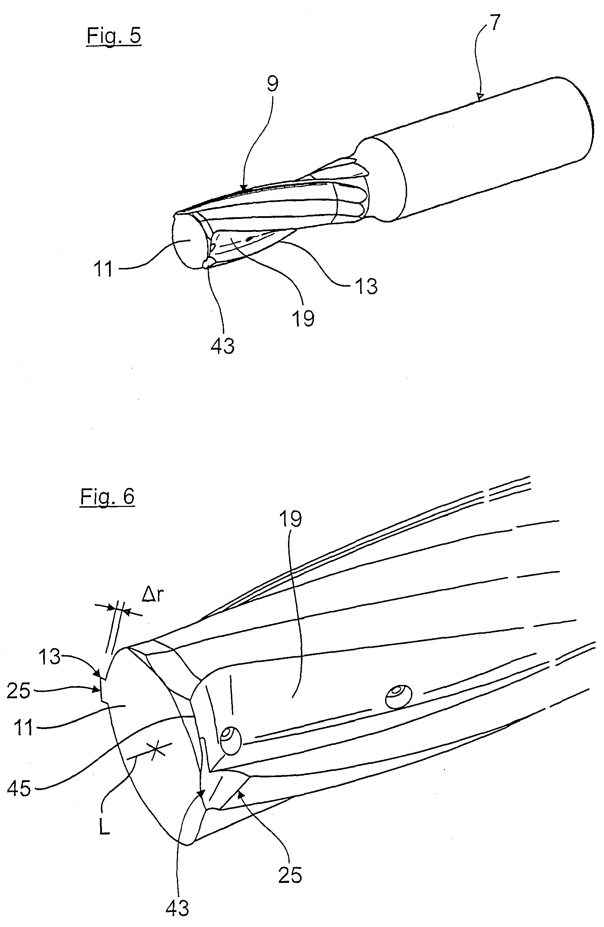

In den folgenden Fig. 5 und 6 ist das Bohrwerkzeug gemäß einem weiteren Ausführungsbeispiel gezeigt, wobei dessen grundsätzlicher Aufbau sowie Funktionsweise identisch mit dem Aufbau und der Funktionsweise der vorangegangenen Ausführungsbeispiele ist. Im Unterschied zu den vorangegangenen Ausführungsbeispielen weist das in der Fig. 5 und 6 gezeigte Bohrwerkzeug an der Bohrkörper-Stirnseite 11 einen radial nach außen abragenden Randsteg 45 auf. Der Randsteg 45 schließt den, entlang der Bohrkörper-Längsachse L verlaufenden nutenförmigen Spanraum 19.

Zudem ist der Randsteg 45 so dimensioniert, dass die beiden Haupt-Schneiden 13 um einen Radialversatz Δr den Randsteg 45 überragen. Der an sich umlaufende Randsteg 45 ist zudem über die beiden Eckausnehmungen 43 unterbrochen, um eine einwandfreie Nutspan-Abfuhr zu gewährleisten.

Anhand der Fig. 7 und 8 ist das Verfahren zur Oberflächenbearbeitung gezeigt. Demzufolge wird in einem ersten Vorbearbeitungsschritt I zunächst in einem Gewindebohrmodus, das heißt mit geringer Drehzahl sowie mit daran angepasster axialer Hubbewegung h das Bohrwerkzeug in die vorgebohrte Werkstück-Kernbohrung 3 eingeführt. Dadurch werden die einander gegenüberliegenden, spiralförmigen Nuten 27 gebildet. Die Nuttiefe t der beiden Nuten 27 entspricht dabei der im folgenden Endbearbeitungsschritt 2 abzutragenden Materialstärke m.

Nach erfolgter Ausbildung der beiden Spiralnuten 27 verbleibt das Bohrwerkzeug in seinem, in der Fig. 7 gezeigten eingefahrenen Zustand, in dem auch die beiden Haupt-Schneiden 13 in Eingriff mit den Spiralnuten 37 sind.

Im nachfolgenden Endbearbeitungsschritt II (Fig. 8) wird dann das Bohrwerkzeug mit zumindest einer halben Umdrehung (das heißt zumindest einem Drehwinkel ϕ von 180°) beaufschlagt, wodurch die beiden Haupt-Schneiden 13 den beabsichtigten umfangsseitigen Materialabtrag vornehmen können. Anschließend wird das Bohrwerkzeug wieder aus der nunmehr fertig bearbeiteten Bohrung entnommen.

In dem obigen Ausführungsbeispiel der Fig. 7 und 8 ist nach erfolgtem Vorbearbeitungsschritt I jede der beiden Haupt-Schneiden 13 in Eingriff mit der jeweiligen Nut 27, und zwar durchgängig über die gesamte Nutlänge I.

Dadurch wird beim nachfolgenden Endbearbeitungsschritt II jede der Haupt-Schneiden 13 mit einem großen Drehmoment belastet.

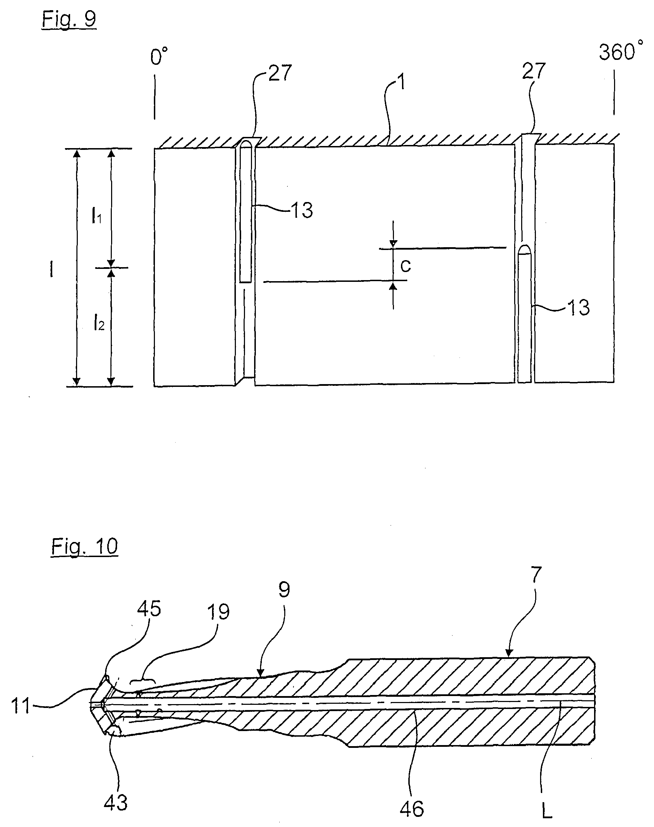

Zur Reduzierung dieser Drehmomentbelastung kann die Anordnung der Haupt-Schneiden 13 am Bohrwerkzeug angepasst werden, wie es in der Fig. 9 angedeutet ist. In der Fig. 9 ist die Kernbohrungs-Innenwandung 1 in einer Abwicklung gezeigt. In der Abwicklung verlaufen die beiden Nuten 27 aus Gründen der Übersichtlichkeit nicht spiralförmig, sondern geradlinig. Jede der beiden Nuten 27 ist in Eingriff mit einer (gestrichelt dargestellten) Haupt-Schneide 13 des Bohrwerkzeugs. Im Unterschied zur den Fig. 7 und 8 erstrecken sich jedoch die beiden Haupt-Schneiden 13 nicht über die gesamte Nutlänge I, sondern lediglich über Teillängen I₁, I₂, und zwar mit geringfügiger Überlappung c. Im nachfolgenden Endbearbeitungsschritt II muss das Bohrwerkzeug nicht mehr nur um einen Drehwinkel ϕ₁ von 180° gedreht werden (wie in der Fig. 8), sondern zumindest um einen Drehwinkel ϕ₂ von 360°.

In Fig. 10 ist das Bohrwerkzeug gemäß einem weiteren Ausführungsbeispiel gezeigt, wobei dessen grundsätzlicher Aufbau sowie Funktionsweise identisch mit dem Aufbau und der Funktionsweise der vorangegangenen Ausführungsbeispiele ist. Im Unterschied zu den vorangegangenen Ausführungsbeispielen weist das in der Fig. 10 gezeigte Bohrwerkzeug an der Bohrkörper-Stirnseite 11 nicht flach, sondern mit einer konischen Spitze ausgeführt, die in den radial nach außen abragenden Randsteg 45 übergeht. Der Randsteg 45 schließt den, entlang der Bohrkörper-Längsachse L verlaufenden nutenförmigen Spanraum 19.

## Patentansprüche

1. Bohrwerkzeug, insbesondere Reibahle, mit einem Spannschaft (7) und einem Bohrkörper (9), zwischen dessen Stirnseite (11) und dem Spannschaft (7) sich zumindest eine Haupt-Schneide (13) entlang einer Bohrkörper-Längsachse (L) erstreckt, die einen Schneidensteg (15) aufweist, der eine, einem nutenförmigen Spanraum (19) zugewandte Spanfläche (17) und eine außenumfangsseitige Freifläche (21) aufweist, die an einer längs der Bohrkörper-Längsachse (L) verlaufenden Schneidkante (23) zusammenlaufen, mit der durch Rotation des Bohrwerkzeugs ein Materialabtrag an einer Innenwandung (1) einer vorgebohrten Werkstück-Kernbohrung (3) erfolgt, **dadurch gekennzeichnet, dass** die entlang der Bohrkörper-Längsachse (L) verlaufende Haupt-Schneide (13) an der Bohrkörper-Stirnseite (11) in eine quer zur Bohrkörper-Längsachse (L) ausgerichtete Nut-Schneide (25) übergeht, mit der vor der Durchführung des durch Rotation erfolgenden Materialabtrags das Bohrwerkzeug in einer axialen Hubbewegung (h) in die Kernbohrung (3) verstellbar ist, und zwar unter Bildung einer entlang der Kernbohrungs-Längsachse (L) verlaufenden Nut (27), mit der die Haupt-Schneide (13) des Bohrwerkzeugs in Eingriff ist.

2. Bohrwerkzeug nach Anspruch 1, **dadurch gekennzeichnet, dass** die Nut-Schneide (25) eine Nutgrund-Schneidkante (29) aufweist, die an einer ersten Schneidenecke (31) mit der Haupt-Schneidkante (23) zusammenläuft.

3. Bohrwerkzeug nach Anspruch 1 oder 2, **dadurch gekennzeichnet, dass** die außenumfangsseitige Freifläche (21) des Schneidenstegs (15) und eine Nut-Spanfläche (33) an der Nutgrund-Schneidkante (29) zusammenlaufen.

4. Bohrwerkzeug nach Anspruch 3, **dadurch gekennzeichnet, dass** die Nut-Spanfläche (33) begrenzt ist durch die Nutgrund-Schneidkante (29) sowie durch eine erste und eine zweite Nutflanken-Schneidkante (35, 37), die jeweils an der ersten Schneidenecke (31) und an einer zweiten Schneidenecke (39) in die Nutgrund-Schneidkante (29) übergehen.

5. Bohrwerkzeug nach einem der vorhergehenden Ansprüche, **dadurch gekennzeichnet, dass** die Haupt-Schneide (13) mit ihrem Schneidensteg (15) mit einem Drallwinkel (α) spiralförmig um die Bohrkörper-Längsachse (L) verläuft, und dass insbesondere die Nut (27) mit der axialen Hubbewegung (h) und einer dem Drallwinkel (α) angepassten Rotationsbewegung (R) des Bohrwerkzeugs spiralförmig in die Innenwandung (1) der Kernbohrung (3) ausbildbar ist.

6. Bohrwerkzeug nach einem der Ansprüche 4 oder 5, **dadurch gekennzeichnet, dass** die Nutgrund-Schneidkante (29) mit Bezug auf eine zur Bohrkörper-Längsachse (L) rechtwinklige Ebene mit einem Anstellwinkel (β) schräggestellt ist, und zwar insbesondere derart, dass in der Rotationsrichtung betrachtet die vorauseilende erste Schneidecke (31) um einen Längsversatz (a₁) von der Bohrkörper-Stirnseite (11) beabstandet ist, der größer als der Längsversatz (a₂) der zweiten Schneidecke (39) ist.

7. Bohrwerkzeug nach einem der Ansprüche 3 bis 6, **dadurch gekennzeichnet, dass** die Nut-Spanfläche (33) der Nut-Schneide (25) radial nach innen mit einer Spanleitfläche (41) verlängert ist, mittels der der beim Nut-Schneiden entstehende Nutspan in den längs der Bohrkörperlängsachse (L) verlaufenden Spanraum (19) gedrückt wird.

8. Bohrwerkzeug nach Anspruch 7, **dadurch gekennzeichnet, dass** die Spanleitfläche (41) in einer Schrägstellung, insbesondere mit dem Anstellwinkel (β), die Bohrkörper-Stirnseite (11) mit dem Spanraum (19) verbindet.

9. Bohrwerkzeug nach Anspruch 7 oder 8, **dadurch gekennzeichnet, dass** die, die Nut-Spanfläche (33) radial nach innen verlängernde Spanleitfläche (41) durch eine Eckausnehmung (43) am Übergang zwischen der Bohrkörper-Stirnseite (11) und dem Schneidensteg (15) gebildet ist.

10. Bohrwerkzeug nach einem der vorhergehenden Ansprüche, **dadurch gekennzeichnet, dass** an der Bohrkörper-Stirnseite (11) ein radial nach außen abragender Randsteg (45) gebildet ist, der den entlang der Bohrkörperlängsachse (L) verlaufenden nutenförmigen Spanraum (19) schließt.

11. Bohrwerkzeug nach Anspruch 10, **dadurch gekennzeichnet, dass** die Haupt-Schneide (13) den Randsteg (45) um einen Radialversatz (Δr) überragt, und/oder dass der umlaufende Randsteg (45) von der Eckausnehmung (43) unterbrochen ist.

12. Bohrwerkzeug nach einem der vorhergehenden Ansprüche, **dadurch gekennzeichnet, dass** umfangsverteilt zumindest eine erste Haupt-Schneide (13) und eine zweite Haupt-Schneide (13) am Bohrkörper (9) ausgebildet sind, die jeweils in Eingriff mit einer jeweiligen Nut (27) bringbar sind, und dass insbesondere die erste Haupt-Schneide (13) und die zweite Haupt-Schneide (13), bevorzugt mit geringer Überlappung (c), sich jeweils nur über eine erste Nutteillänge (I₁) und eine zweite Nutteillänge (I₂) erstrecken.

13. Verfahren zur Oberflächenbearbeitung einer Innenwandung (1) einer vorgebohrten Werkstück-Kernbohrung (3) mittels eines umfangsseitigen Materialabtrags, insbesondere durch ein Bohrwerkzeug nach einem der vorhergehenden Ansprüche, bei dem in einem Vorbearbeitungsschritt (I) eine längs der Kernbohrungsachse verlaufende Nut (27) in der Kernbohrungs-Innenwandung (1) ausgebildet wird, und in einem Endbearbeitungsschritt (II) eine in der Nut (27) angeordnete Haupt-Schneide (23) eines Bohrwerkzeug unter Rotation den Materialabtrag vornimmt.

14. Verfahren nach Anspruch 13, **dadurch gekennzeichnet, dass** die Nuttiefe (t) der in der Innenwandung (1) der Kernbohrung (3) ausgebildeten Nut (27) der abzutragenden Materialstärke (m) entspricht.

15. Verfahren nach Anspruch 13 oder 14, **dadurch gekennzeichnet, dass** sowohl der Vorbearbeitungsschritt (I) als auch der Endbearbeitungsschritt (II) ohne Werkzeugwechsel, das heißt durch ein gemeinsames Bohrwerkzeug nach einem der Ansprüche 1 bis 12 erfolgen.

16. Verfahren nach Anspruch 13 oder 14, **dadurch gekennzeichnet, dass** der Vorbearbeitungsschritt (I) und der Endbearbeitungsschritt (II) mit Werkzeugwechsel, das heißt durch unterschiedliche Bohrwerkzeuge erfolgen.

## Claims

1. Drilling tool, in particular a reamer, comprising a clamping shank (7) and a drill body (9), in which at least one main blade (13) extends between the end face (11) of the drill body and the clamping shank (7) along a longitudinal axis (L) of the drill body, said at least one main blade having a blade web (15) which has a rake face (17) facing a groove-shaped chip space (19) and a free surface (21) arranged on the outer circumference, said rake face and said free surface converging at a cutting edge (23) which extends along the longitudinal axis (L) of the drill body and by which a material removal takes place on an inner wall (1) of a pre-drilled core bore (3) of the workpiece due to rotation of the drilling tool, **characterised in that** the main blade (13) extending along the longitudinal axis (L) of the drill body transitions at the end face (11) of the drill body into a groove blade (25) which is oriented transversely to the longitudinal axis (L) of the drill body and by which, before the material removal is carried out by rotation, the drilling tool can be moved in an axial lifting movement (h) into the core bore (3), forming a groove (27) which extends along the longitudinal axis (L) of the core bore and with which the main blade (13) of the drilling tool is in engagement.

2. Drilling tool according to claim 1, **characterised in that** the groove blade (25) has a groove base cutting edge (29) which converges with the main cutting edge (23) at a first blade corner (31).

3. Drilling tool according to claim 1 or 2, **characterised in that** the outer circumferential free surface (21) of the blade web (15) and the groove rake face (33) converge at the groove-base cutting edge (29).

4. Drilling tool according to claim 3, **characterised in that** the groove rake face (33) is delimited by the groove base cutting edge (29) and by a first and a second groove flank cutting edge (35, 37), which transition respectively at the first blade corner (31) and at a second blade corner (39) into the groove base cutting edge (29).

5. Drilling tool according to one of the preceding claims, **characterised in that** the main blade (13) extends with its blade web (15) helically about the longitudinal axis (L) of the drill body at an angle of twist (α), and that in particular the groove (27) can be formed helically into the inner wall (1) of the core bore (3) by the axial lifting movement (h) and a rotational movement (R) of the drilling tool which is adapted to the angle of twist (α).

6. Drilling tool according to one of claims 4 or 5, **characterised in that** the groove base cutting edge (29) inclined at an angle of attack (β) relative to a plane perpendicular to the longitudinal axis (L) of the drill body, in particular in such a way that when viewed in the direction of rotation a leading first blade corner (31) is spaced apart from the end face (11) of the drill body by a first longitudinal offset (a₁) which is greater than the longitudinal offset (a₂) of the second blade corner (39).

7. Drilling tool according to one of claims 3 to 6, **characterised in that** the rake face (33) of the groove blade (25) is extended radially inwards by a chip guiding surface (41) by means of which the groove chips produced during groove cutting are pushed into the chip space (19) extending along the longitudinal axis (L) of the drill body.

8. Drilling tool according to claim 7, **characterised in that** in an inclined position, in particular at the angle of attack (β), the chip guiding surface (41) connects the end face (11) of the drill body to the chip space (19).

9. Drilling tool according to claim 7 or 8, **characterised in that** the chip guiding surface (41) which extends the rake face (33) radially inwards is formed by a corner recess (43) at the transition between the end face (11) of the drill body and the blade web (15).

10. Drilling tool according to one of the preceding claims, **characterised in that** on the end face (11) a radially outwardly projecting marginal web (45) is formed which closes groove-shaped chip space (19) extending along the longitudinal axis (L) of the drill body.

11. Drilling tool according to claim 10, **characterised in that** the main blade (13) projects over the peripheral web (45) by a radial offset (Δr), and/or that the marginal web (45) is interrupted by the corner recess (43).

12. Drilling tool according to one of the preceding claims, **characterised in that** at least one first main blade (13) and one second main blade (13) are formed on the drill body (9), distributed over the circumference of the drill body, and can be brought into engagement with a respective groove (27), and that in particular the first main blade (13) and the second main blade (13), preferably with a slight overlap (c), each extend only over a first partial groove length (I₁) and a second partial groove length (I₂).

13. Method for surface processing of an inner wall (1) of a pre-drilled core bore (3) of a workpiece, by means of a circumferential material removal, in particular by a drilling tool according to one of the preceding claims, wherein in a pre-processing step (I) a groove (27) extending along the axis of the core bore is formed in the inner wall (1) of the core bore, and in a final processing step (II) a main blade (23) of a drilling tool is arranged in the groove (27) and performs the material removal by rotation.

14. Method according to claim 13, **characterised in that** the groove depth (t) of the groove (27) formed in the inner wall (1) of the core bore (3) corresponds to the material thickness (m) to be removed.

15. Method according to claim 13 or 14, **characterised in that** the both pre-processing step (I) and the final processing step (II) take place without a tool change, i.e. by a common drilling tool according to one of claims 1 to 12.

16. Method according to claim 13 or 14, **characterised in that** the pre-processing step (I) and the final processing step (II) are performed by different drilling tools.

## Revendications

1. Outil de forage, en particulier alésoir avec un arbre de serrage (7) et un corps de forage (9), entre son côté avant (11) et l'arbre de serrage (7) s'étend au moins une coupe principale (13) le long d'un axe longitudinal de corps de forage (L), qui présente une nervure de coupe (15) qui présente une surface d'attaque (17) tournée vers un espace d'attaque (19) en forme de rainure et une surface de dépouille (21) côté périphérie extérieure qui convergent sur une arête de coupe (23) s'étendant le long de l'axe longitudinal de corps de forage (L), avec laquelle par la rotation de l'outil de forage, un enlèvement de matière sur une paroi intérieure (1) d'un carottage de pièce (3) préforé est effectué, **caractérisé en ce que** la coupe principale (13) s'étendant le long de l'axe longitudinal de corps de forage (L) sur le côté avant de corps de forage (11) passe dans une coupe de rainure (25) orientée transversalement à l'axe longitudinal de corps de forage (L), avec laquelle avant la réalisation de l'enlèvement de matière s'effectuant par rotation, l'outil de forage peut être réglé dans un mouvement de levage (h) axial dans le carottage (3) et ce en formant une rainure (27) s'étendant le long de l'axe longitudinal de carottage (L), avec laquelle la coupe principale (13) de l'outil de forage est en engagement.

2. Outil de forage selon la revendication 1, **caractérisé en ce que** la coupe de rainure (25) présente une arête de coupe de fond de rainure (29) qui converge sur un premier coin de coupe (31) avec l'arête de coupe principale (23).

3. Outil de forage selon la revendication 1 ou 2, **caractérisé en ce que** la surface de dépouille (21) côté périphérie extérieure de la nervure de coupe (15) et une surface d'attaque de rainure (33) convergent sur l'arête de coupe de fond de rainure (29).

4. Outil de forage selon la revendication 3, **caractérisé en ce que** la surface de d'attaque de rainure (33) est délimitée par l'arête de coupe de fond de rainure (29) ainsi que par une première et une seconde arête de coupe de flanc de rainure (35, 37) qui passent respectivement sur le premier coin de coupe (31) et sur un second coin de coupe (39) dans l'arête de coupe de fond de rainure (29).

5. Outil de forage selon l'une quelconque des revendications précédentes, **caractérisé en ce que** la coupe principale (13) s'étend avec sa nervure de coupe (15) avec un angle d'inclinaison (α) en forme de spirale autour de l'axe longitudinal de corps de forage (L) et **en ce qu'**en particulier la rainure (27) peut être réalisée avec le mouvement de levage (h) axial et un mouvement de rotation (R) adapté à l'angle d'inclinaison (α) de l'outil de forage en forme de spirale dans la paroi intérieure (1) du carottage (3).

6. Outil de forage selon l'une quelconque des revendications 4 ou 5, **caractérisé en ce que** l'arête de coupe de fond de rainure (29) est inclinée par rapport à un plan à angles droits par rapport à l'axe longitudinal de corps de forage (L) avec un angle d'inclinaison (β) et ce en particulier de telle manière que vu dans le sens de rotation, le premier coin de coupe (31) en avance est espacé d'un déport longitudinal (a₁) du côté avant de corps de forage (11) qui est plus grand que le déport longitudinal (a₂) du second coin de coupe (39).

7. Outil de forage selon l'une quelconque des revendications 3 à 6, **caractérisé en ce que** la surface d'attaque de rainure (33) de la coupe de rainure (25) est prolongée radialement vers l'intérieur avec une surface de conduite de copeau (41), à l'aide de laquelle le copeau de rainure apparaissant lors de la coupe de rainure est pressé dans l'espace d'attaque (19) s'étendant le long de l'axe longitudinal de corps de forage (L).

8. Outil de forage selon la revendication 7, **caractérisé en ce que** la surface de conduite de copeau (41) relie dans une position inclinée, en particulier avec l'angle d'inclinaison (β), le côté avant de corps de forage (11) à l'espace d'attaque (19).

9. Outil de forage selon la revendication 7 ou 8, **caractérisé en ce que** la surface de conduite de copeau (41) prolongeant radialement vers l'intérieur la surface d'attaque de rainure (33) est formée par un évidement de coin (43) sur la transition entre le côté avant de corps de forage (11) et la nervure de coupe (15).

10. Outil de forage selon l'une quelconque des revendications précédentes, **caractérisé en ce qu'**une nervure de bord (45) dépassant radialement vers l'extérieur est formée sur le côté avant de corps de forage (11), laquelle ferme l'espace d'attaque (19) en forme de rainure s'étendant le long de l'axe longitudinal de corps de forage (L).

11. Outil de forage selon la revendication 10, **caractérisé en ce que** la coupe principale (13) dépasse la nervure de bord (45) d'un déport radial (Δr) et/ou **en ce que** la nervure de bord (45) tournante est interrompue par l'évidement de coin (43).

12. Outil de forage selon l'une quelconque des revendications précédentes, **caractérisé en ce qu'**au moins une première coupe principale (13) et une seconde coupe principale (13) sont réalisées, réparties sur la périphérie, sur le corps de forage (9), lesquelles peuvent être amenées respectivement en engagement avec une rainure (27) respective et **en ce qu'**en particulier la première coupe principale (13) et la seconde coupe principale (13) de préférence avec un moindre chevauchement (c) s'étendent respectivement seulement sur une première longueur partielle de rainure (I₁) et une seconde longueur partielle de rainure (I₂).

13. Procédé de traitement de surface d'une paroi intérieure (1) d'un carottage de pièce (3) préforé à l'aide d'un enlèvement de matière côté périphérie, en particulier par un outil de forage selon l'une quelconque des revendications précédentes, pour lequel dans une étape de prétraitement (I), une rainure (27) s'étendant le long de l'axe de carottage dans la paroi intérieure (1) de carottage est réalisée, et dans une étape de traitement final (II), une coupe principale (23) agencée dans la rainure (27) d'un outil de forage entreprend sous rotation l'enlèvement de matière.

14. Procédé selon la revendication 13, **caractérisé en ce que** la profondeur de rainure (t) de la rainure (27) réalisée dans la paroi intérieure (1) du carottage (3) correspond à l'épaisseur de matériau (m) à enlever.

15. Procédé selon la revendication 13 ou 14, **caractérisé en ce que** non seulement l'étape de prétraitement (I) mais aussi l'étape de traitement final (II) sont effectuées sans changement d'outil, c'est-à-dire par un outil de forage commun selon l'une quelconque des revendications 1 à 12.

16. Procédé selon la revendication 13 ou 14, **caractérisé en ce que** l'étape de prétraitement (I) et l'étape de traitement final (II) sont effectuées avec changement d'outil, c'est-à-dire par des outils de forage différents.
